# EUROPEAN PATENT APPLICATION

(11) **EP 4 550 635 A1**
(43) Date of publication of application: **07.05.2025**
(21) Application number: 23207864.2
(22) Date of filing: 06.11.2023
(51) Int. Cl.: H02K 3/24, H02K 9/197, H02K 5/20, H02K 9/19

(54) **COOLING DEVICE IN AN ELECTRICAL MACHINE**

(71) Applicant: Scania CV AB, 151 87 Södertälje (SE)
(72) Inventor: POLJO, Harun, 151 34 Södertälje (SE); AFRIDI, Usman, 152 31 Södertälje (SE)
(74) Representative: Scania CV AB

(57) **Abstract**

A cooling device (210), attachable to an end-section (200) of a stator (120), which is forming an electrical machine (100) in conjunction with a rotor (110). The stator (120) comprises a stator winding, and wherein the cooling device (210) comprises: a fluid inlet section (211), connectable to a cooling channel (140) of the stator (120), wherein the fluid inlet section (211) is configured to receive cooling fluid via the cooling channel (140), when connected. The cooling device (210) also comprises a fluid outlet section (212), in liquid communication with the fluid inlet section (211), wherein the fluid outlet section (212) is directed to output received cooling fluid in a direction towards an end winding section (220) of the stator winding.

## Description

### TECHNICAL FIELD

This document discloses a cooling device attachable to an end-section of a stator of an electrical machine according to the appended patent claims. This document further relates to an electrical machine and a vehicle comprising an electrical machine.

### BACKGROUND

Modern electric machines such as electric motors, generators and/ or alternators are often based on the concept of a rotor with magnets, coaxially arranged to rotate within a stator, in order to achieve required performance.

The stator comprises windings made by an electrically transmissive coil of wire. When the windings are provided with alternating current, magnets comprised in the rotor are affected and causes the rotor to start rotating.

Due to resistance in the windings, for example hairpin windings, heat is developed. High power in limited machine size is often desired when electric machines are used in vehicle propulsion systems and similar industrial applications. To avoid overheating, cooling may be applied, by applying cooling liquid via a cooling channel in the stator.

At the respective end sections of the stator, the end windings are interconnected outside the stator. These interconnected end windings are not cooled by the cooling channel in the stator, causing them to form hotspots of the electric machine.

Existing electric machines of the above kind however exhibit poor cooling characteristics of the windings and the stator, in particular at the end windings. Overheating of the stator will decrease efficiency of electric machines, affecting performance and lifetime of the involved components. Insulation layers may melt, for example.

It would be desired to find a solution addressing at least some of the above issues and improve cooling of electric machines, thereby improving capacity of high continuous power and torque.

### SUMMARY

It is therefore an object of this invention to solve at least some of the above problems and improve cooling capacity at end windings of a stator in an electric machine.

According to a first aspect of the invention, this objective is achieved by a cooling device, attachable to an end-section of a stator. The stator is forming an electrical machine in conjunction with a rotor. The stator comprises a stator winding. The cooling device comprises a fluid inlet section and a fluid outlet section.

The fluid inlet section is connectable to a cooling channel of the stator, wherein the fluid inlet section is configured to receive cooling fluid via the cooling channel, when connected.

The fluid outlet section is in communication with the fluid inlet section, wherein the fluid outlet section is directed to output received cooling fluid in a direction towards an end winding section of the stator winding.

Thanks to the provided solution, cooling fluid is provided to the end windings, i.e., a part of the stator winding that is in particular exposed to increased temperature during at least some load conditions of the electric machine, independently of the pressure of the cooling fluid, and/ or influence of external forces such as gravity, or inertia due to acceleration/ deceleration on the fluid. Thereby, cooling of the end winding section of the stator winding is improved.

Optionally, the fluid outlet section may comprise a spray nozzle or jet nozzle, configured to spray cooling fluid onto the end winding section of the stator winding.

By distributing the cooling fluid as an aerosol i.e., a cloud of liquid particles, onto the end winding section, a larger surface area of the stator winding is influenced by the cooling fluid. Thereby the cooling is distributed more evenly at the end winding, leading to a more efficient cooling.

Optionally, the cooling device may comprise a manifold section, fluidly connected to multiple fluid outlet sections.

An advantage by providing multiple fluid outlet sections is that the cooling fluid is distributed over a larger area than is possible with only one fluid outlet section.

Optionally, the multiple fluid outlet sections of the cooling device may be distributed radially.

Thereby, an even distribution of cooling liquid in radial direction is provided.

Optionally, the manifold section of the cooling device may be fluidly connected to multiple fluid inlet sections.

Thereby, an increased amount of cooling liquid, in comparison with only one single fluid inlet section, may be received and provided to the fluid outlet section/s, which enhance the cooling.

Optionally, the fluid outlet section of the cooling device may be directed towards a predicted hot spot of the end winding section of the stator winding.

By directing the fluid outlet section towards the part/s of the end winding section that are predicted to be in most need of cooling, the end winding section is more evenly cooled.

Optionally, the predicted hot spot of the end winding section of the stator winding may be situated at the end winding section which may be situated closest to the rotor, in radial direction. Thereby, the fluid outlet section of the cooling device may be directed towards the end winding section of the stator winding, which is situated closest to the rotor in radial direction.

Optionally, the end winding section of the stator winding may be enclosed by a stator housing which, in conjunction with the cooling device, form a cavity for submerging the end winding section with the cooling fluid.

By submerging the end winding in cooling liquid, an efficient cooling of the end winding section is provided.

Optionally, the cooling device may comprise a sealing element forming a seal against leakage of cooling liquid into an airgap between the stator and the rotor.

In case cooling liquid is allowed to enter the air gap between the stator and the rotor, it would result in increased friction and thereby also reduced efficiency of the electrical machine. Thanks to the sealing element, cooling liquid is disallowed to enter the air gap. Yet, submerging the end winding in cooling liquid is enabled.

Optionally, the flow of cooling fluid through the cooling device may be reversable, such that cooling fluid may be absorbed via the fluid outlet section and forwarded via the fluid inlet section to the cooling channel of the stator.

By repeatedly reversing the flowing direction of the cooling fluid through the cooling device and the stator, the heat level of the stator winding is more evenly distributed in comparison to continuously providing the cooling fluid in the same flowing direction. Thereby an enhanced heat exchange is provided.

Optionally, the cooling device may have an annular shape and a slotted profile, allowing passage of the stator winding when the cooling device is attached to the end-section of the stator.

According to a second aspect of the invention, this objective is achieved by an electrical machine. The electrical machine comprises a stator and a rotor. The stator comprises a stator winding and a cooling channel. The rotor is configured to operate coaxially inside the stator. The electrical machine also comprises a cooling device according to the first aspect.

Reduced heat development, thanks to the improved cooling effect provided by the cooling device, leads to extended lifetime of the electrical machine and the comprised elements. Hereby, a better continuous power and torque of the electrical machine is achieved.

According to a third aspect of the invention, this objective is achieved by a vehicle. The vehicle comprises an electrical machine according to the second aspect of the invention.

Other advantages and additional novel features will become apparent from the subsequent detailed description.

### FIGURES

Embodiments of the invention will now be described in further detail with reference to the accompanying figures, in which:
- **Figure 1A**: illustrates an end section of an electric machine according to an embodiment.
- **Figure 1B**: illustrates an end section of an electric machine according to an embodiment.
- **Figure 2A**: illustrates a cross section of an ending of an electric machine with a cooling device according to an embodiment.
- **Figure 2B**: illustrates a cross section of an ending of an electric machine with a cooling device according to an embodiment.
- **Figure 3A**: illustrates a side view of a cross section of an ending of a stator with a cooling device according to an embodiment.
- **Figure 3B**: illustrates a side view of a cross section of an ending of a stator with a cooling device according to an embodiment.
- **Figure 3C**: illustrates a side view of a cross section of an ending of a stator with a cooling device according to an embodiment.
- **Figure 3D**: illustrates a side view of a cross section of an ending of a stator with a cooling device according to an embodiment.
- **Figure 4A**: illustrates a first side of a cooling device according to an embodiment.
- **Figure 4B**: illustrates a second side of a cooling device according to an embodiment.
- **Figure 5**: illustrates a vehicle comprising an electric machine with a cooling device according to an embodiment.

### DETAILED DESCRIPTION

Embodiments of the invention described herein are defined as a cooling device, an electrical machine comprising the cooling device and a vehicle comprising the electrical machine which may be put into practice in the embodiments described below. These embodiments may, however, be exemplified and realised in many different forms and are not to be limited to the examples set forth herein; rather, these illustrative examples of embodiments are provided so that this disclosure will be thorough and complete.

Still other objects and features may become apparent from the following detailed description, considered in conjunction with the accompanying drawings. It is to be understood, however, that the drawings are designed solely for purposes of illustration and not as a definition of the limits of the herein disclosed embodiments, for which reference is to be made to the appended claims. Further, the drawings are not necessarily drawn to scale and, unless otherwise indicated, they are merely intended to conceptually illustrate the structures and procedures described herein.

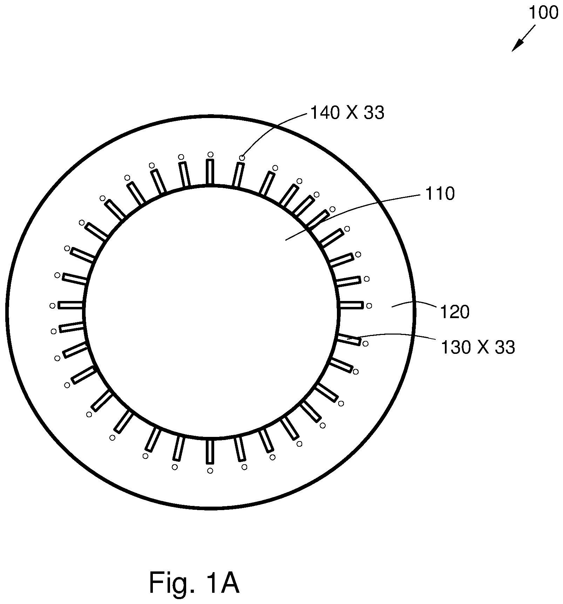

Figure 1A illustrates an end section of an electric machine 100, as regarded from an axial view. The electric machine 100 comprises a rotor 110 and a stator 120. The stator 120 is enclosing the coaxially arranged rotor 110.

The rotor 110 is rotatably disposed on an inward side of the stator 120 with an air gap distance between the rotor surface and the stator 120, creating a radial clearance distance between the rotor 110 and the stator 120. Thus, the rotor 110 forms a rotating part of the electrical machine 100 while the stator 120 forms a stationary part thereof.

The rotor 110 may comprise a number of magnets creating a magnetic field which, when the rotor 110 is rotating, thereby generating electrical current due to induction, when the electrical machine 100 operates in generator mode. Alternatively, the rotor 110 may comprise rotor windings, thereby creating a field wound rotor without magnets.

The stator 120 comprises a plurality of radially extending stator slots 130, radially arranged about a common central axis of the stator 120, wherein the stator slots 130 are located apart, equidistantly from each. The part of the stator 120 between the stator slots 130 may be referred to as teeth. The stator slots 130 comprises windings, for example in form of hair pin windings, sometimes referred to as Form-Wound Coils. Other possible alternatives may be so called orthocyclic windings, and/ or concentrated windings.

The stator slots 130 may be open, closed or semi-closed in different embodiments. The open stator slot 130 may have substantially flat walls extending to a radially inner delimiting surface of the stator 120. In other embodiments, the walls of the open stator slot 130 may have other configurations, e.g., a convex/ concave profile, an oval profile, etc. Open stator slots 130 are easily implemented. In the open stator slots 130, assembly and repair of winding are easy.

The stator 120 also comprises cooling channels 140, which may be arranged at a radial end-section of a respective stator slot 130, i.e., at the winding slot bottom, as illustrated in Figure 1A. Thus, the cooling channels 140 are extending in an axial direction in parallel with the winding in the respective stator slot 130. The closer the hole 140 is to the radial end-section of the stator slot 130, the better cooling effect could be expected.

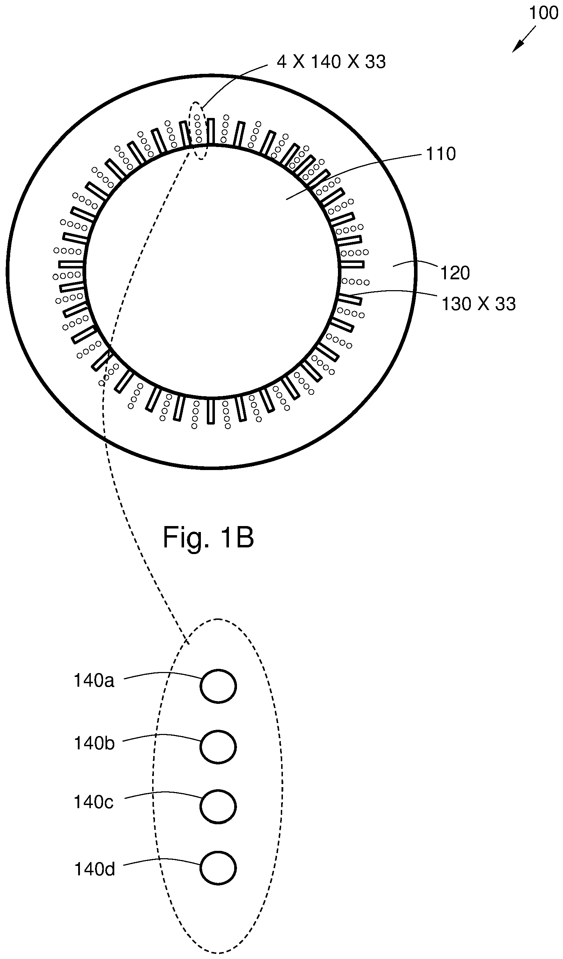

In other embodiments, the cooling channels 140 may be arranged differently, in other parts of the stator 120, for example in the teeth of the stator 120 as illustrated in Figure 1B.

The cooling channels 140 comprises cooling fluid, such as for example oil, water, or a mixture of water and glycol. Oil has several advantages as cooling fluid. Oil has a higher boiling point than water and can be used for cooling the electrical machine 100, even if water cooling also may exceed 100 degrees Celsius when pressurised. Oil is also an electrical insulator, why an accidental leak from the cooling channel 140 does not cause any hazard, besides, the interruption/ disturbance in cooling.

The cooling channel 140 may be fluidly connected to a cooling circuit for cooling the stator 120. The cooling circuit may comprise a pump for causing the cooling fluid such as oil to circulate through the cooling channels 140, and a heat exchanger where heat from the heated fluid is dissipated.

In the illustrated examples in Figure 1A, the holes 140 have a substantially circular shape profile in a plane perpendicular to the rotation axis of the rotor 110. However, in other embodiments, the holes 140 may have another shape profile such as for example circular quadratic, triangular, parallelepipedal, etc.

The electrical machine 100 may be configured for converting electrical energy into mechanical energy thereby operating as an electric motor. The electrical machine 100 may also, or alternatively comprise an electric generator, which has the same configuration as an electric motor but operates with a reversed flow of power, converting mechanical energy into electrical energy.

The electrical machine 100 may be comprised in a vehicle and be configured to propel the vehicle while driving thereby operating as an electric motor. In case the vehicle is driving down-hill and/ or braking, the electrical machine 100 instead may operate as an electric generator, generating electricity which may be stored in a battery.

The stator slots 130 of the stator 120 comprises windings. The end sections of these windings are situated in the respective longitudinal end section of the stator 120, in each respective stator slot 130. The end winding may be exposed for a large part or even the majority of the stator losses during some load conditions of the electrical machine 100. Thereby, the end windings become very hot, unless efficiently cooled.

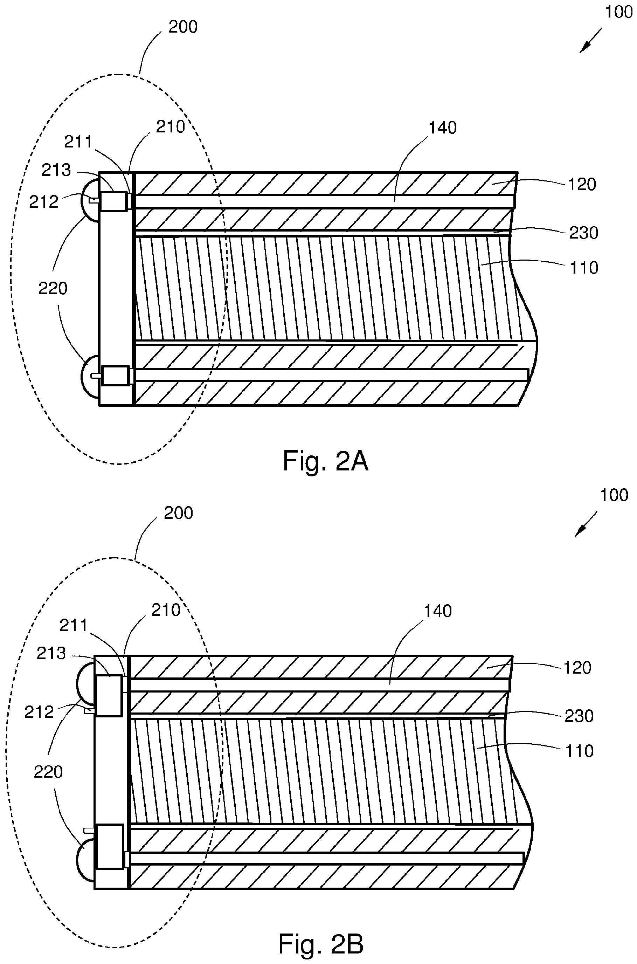

A cooling device 210 is applied to the end-section 200 of the stator 120, as schematically illustrated in the cross section views of Figures 2A and 2B, respectively, in order to cool down temperature of the end windings.

The cooling device 210 comprises a fluid inlet section 211, which is connectable to the cooling channel 140 of the stator 120. The fluid inlet section 211 is configured to receive cooling fluid via the cooling channel 140. The cooling device 210 also comprises a fluid outlet section 212, in liquid communication with the fluid inlet section 211. The fluid outlet section 212 is directed to output received cooling fluid in a direction towards an end winding section 220 of the stator winding.

The cooling device 210 may divert, i.e., adjust flowing direction of the cooling fluid received from the cooling channel 140, and direct the cooling fluid in a direction towards a hotspot of the end winding section 220 via the fluid outlet section 212.

The fluid outlet section 212 may comprise a spray nozzle, configured to spray cooling fluid onto the end winding section 220 of the stator winding, thereby cooling the end winding section 220 by spraying a directed mist of cooling fluid by atomization of the fluid. The output cooling fluid may thereby be provided to a large surface area of the end winding section 220.

The fluid outlet section 212 may comprise a jet nozzle, configured to provide a steady stream of cooling fluid in the direction of the jet nozzle. An advantage is that a precise cooling is applicable to a hotspot of the end winding section 220, which is where it is most desired to apply efficient cooling.

The cooling device 210 may in addition comprise a manifold section 213, fluidly connected to the fluid inlet section 211, and also to the fluid outlet section 212. The manifold section 213 may be connected to multiple inlet sections 211, and/ or multiple outlet sections 212.

The cooling liquid, after having been provided onto the end windings, may be evacuated to a sump.

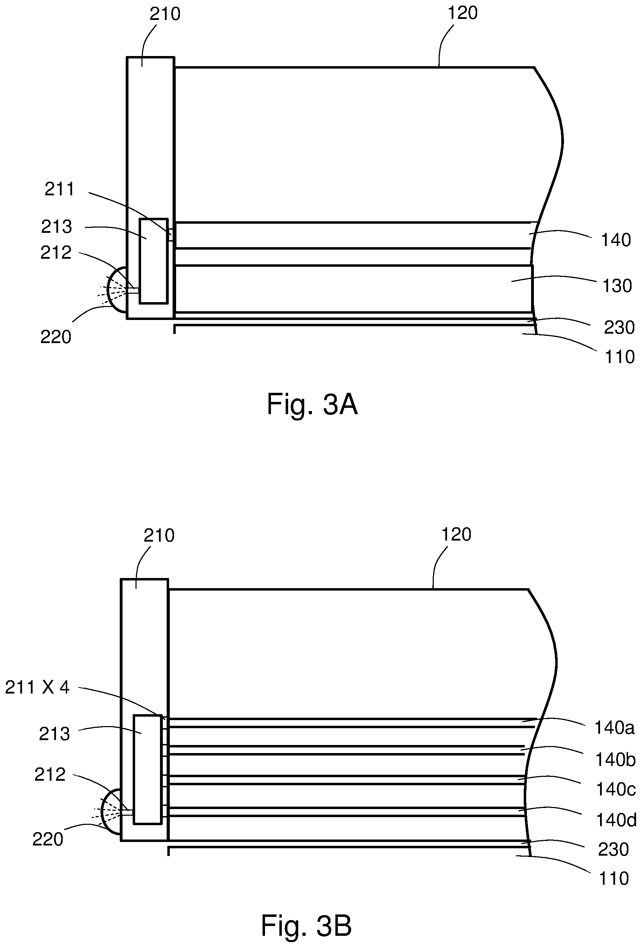

Figure 3A illustrates a vertical cross section of an end section 200 of a stator 120 with a cooling device 210, illustrating the embodiment illustrated in Figure 1A and/ or Figure 2A.

Cooling fluid is provided via the cooling channel 140 of the stator 120 and the fluid inlet section 211 to the cooling device 210. The manifold section 213 of the cooling device 210 direct the received cooling fluid to the fluid outlet section 212, where it is directed towards the end winding section 220 of the stator winding. The cooling device 210 may be annular, adapting to shape of the stator end section illustrated in Figures 1A-1B.

The fluid outlet sections 212 may be situated below the end winding section 220 of the stator winding, in radial direction, i.e., at a position radially inside the winding. It is thereby possible to cool the end winding section 220 of the stator winding based only on pressure of the cooling liquid. It also becomes possible to reach parts of the end winding that cannot be cooled when the fluid outlet sections 212 only is situated above the end winding section 220 of the stator winding, in radial direction. Thereby, a more even cooling is achieved.

Figure 3B illustrates a vertical cross section of an end section 200 of a stator 120 with a cooling device 210, illustrating the embodiment illustrated in Figure 1B and/ or Figure 2B.

In the illustrated embodiment, multiple fluid inlet sections 211 of the cooling device 210 are arranged to receive cooling fluid from a respective cooling channel 140a, 140b, 140c, 140d. The received cooling fluid is directed via the manifold section 213 to the fluid outlet section 212. The fluid outlet section 212 is directed towards the end winding section 220 of the stator winding.

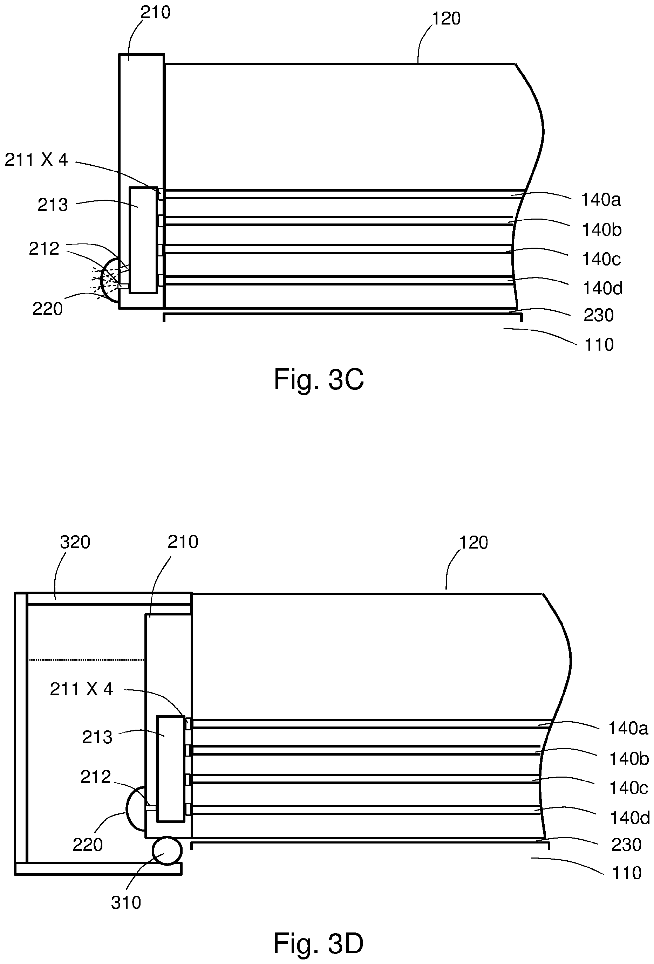

Figure 3C illustrates a vertical cross section of an end section 200 of a stator 120 with a cooling device 210, similar to the one illustrated in Figure 1B and/ or Figure 2B, but with the difference that the cooling device 210 comprises a plurality of fluid outlet sections 212. The fluid outlet sections 212, which may be radially distributed, may be directed towards the end winding section 220 of the stator winding.

Figure 3D illustrates a vertical cross section of an end section 200 of a stator 120 with a cooling device 210, similar to the one illustrated in Figure 1B and/ or Figure 2B. However, in the illustrated embodiment, the cooling device 210 together with a stator housing 320 form a cavity for submerging the end winding section 220 of the stator winding with the cooling fluid.

Thereby, the end winding section 220 may be submerged with the cooling fluid, creating an efficient cooling of the end winding section 220. An integrated sealing element 310 may be applied, for forming a seal against leakage of cooling liquid into an airgap 230 between the stator 120 and the rotor 110.

In case cooling liquid is allowed to enter the airgap 230, an increased friction between the rotor 110 and the stator 120 may affect the efficiency of the electrical machine 100.

The integrated sealing element 310 may comprise for example rubber, silicone, nitrile, thermoplastic and/ or elastomeric materials, or similar.

Superfluous cooling liquid may be evacuated from the cavity formed by the stator housing 320 via a hole and the cooling liquid may be provided to the sump.

In some embodiments, the flow of the cooling liquid may be reversed by reversing the pump direction of the pumps. Thus, cooling liquid comprised in the cooling device 210 may be absorbed by the fluid outlet section 212 and forwarded via the fluid inlet section 211 to the cooling channel 140 of the stator 120. The cooling liquid may then be output to the corresponding cooling device in the other end section of the stator 120.

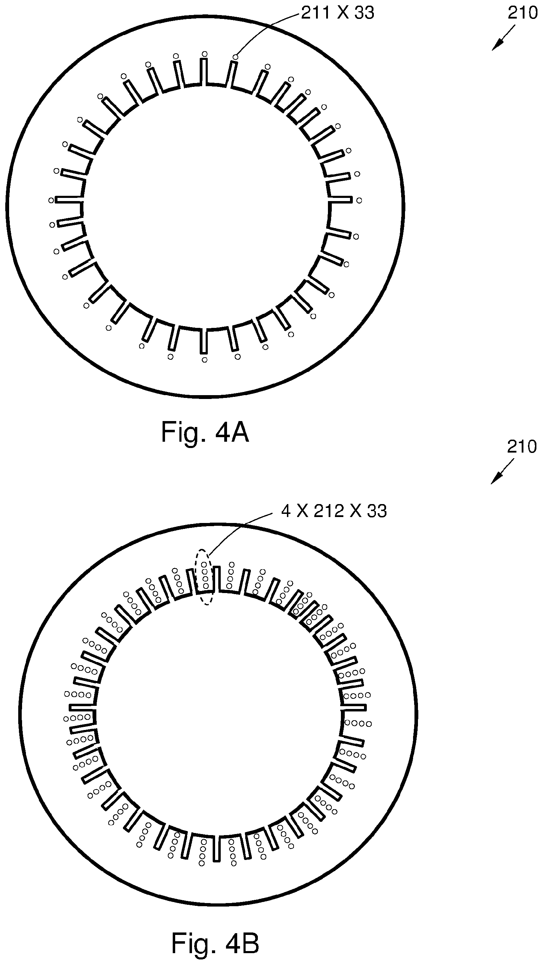

Figure 4A illustrates a first side of a cooling device 210. The fluid inlet sections 211 of the cooling device 210 are configured to receive cooling liquid from the cooling channel 140 of the stator 120 as illustrated in Figure 1A.

Figure 4b illustrates a second side of the cooling device 210, which is opposite to the first side. Cooling liquid which is received from the cooling channel 140 of the stator 120, via the fluid inlet sections 211, is led through a channel or manifold section 213 to the fluid outlet sections 212. The manifold section 213 may thereby fluidly connect the fluid inlet sections 211 with the fluid outlet sections 212, and allow cooling fluid to flow through the cooling device 210, from the fluid inlet section 211, to the fluid outlet sections 212.

The fluid outlet sections 212 are directed towards an end winding section 220 of the stator winding. In the illustrated embodiment, there are four fluid outlet sections 212, distributed radially. In other embodiments, the cooling device 210 may comprise another number of fluid outlet sections 212, such as one, two, three, ..., etc., connected with the fluid inlet section 211. In case the cooling device 210 comprises more than one fluid outlet sections 212, they may be arranged or distributed in another shape than radially, such as for example equidistantly, in radial direction, from the axis of rotation of the rotor 110. The fluid outlet sections 212 may be arranged to be aligned with the teeth profile of the stator 120 and be directed towards predicted hot spots of the end winding section 220.

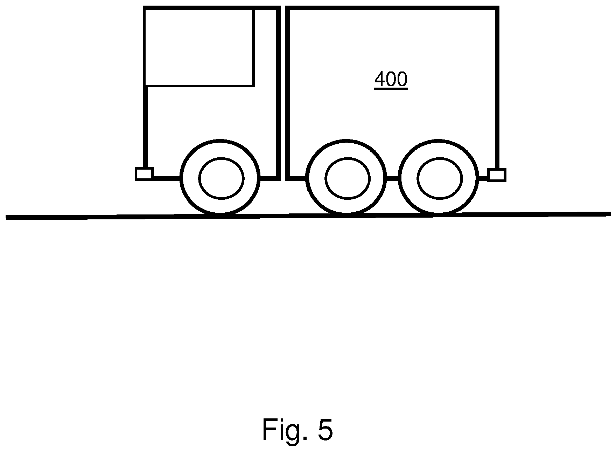

Figure 5 illustrates a vehicle 400 comprising an electrical machine 100 with a rotor 110, a stator 120, and a cooling device 210 according to any above-described embodiment.

The vehicle 400 may be driver controlled or driverless autonomously controlled in different embodiments. The vehicle 400 may comprise a means for transportation in broad sense such as e.g., a truck, a car, a motorcycle, a trailer, a bus, a bike, a train, a tram, an aircraft, a watercraft, an unmanned underwater vehicle, a drone, a humanoid service robot, a spacecraft, or other similar manned or unmanned means of conveyance running e.g. on wheels, rails, air, water, or similar media.

The vehicle 400 may be an electric vehicle, a hybrid vehicle, a plug-in hybrid vehicle, etc., wherein the electrical machine 100 is configured for propelling the vehicle 400 and/ or for generating electrical energy for the vehicle 400 to use, depending on mode: motor mode or generator mode.

As used herein, the term "and/ or" comprises any and all combinations of one or more of the associated listed items. The term "or" as used herein, is to be interpreted as a mathematical OR, i.e., as an inclusive disjunction; not as a mathematical exclusive OR (XOR), unless expressly stated otherwise. In addition, the singular forms "a", "an" and "the" are to be interpreted as "at least one", thus also possibly comprising a plurality of entities of the same kind, unless expressly stated otherwise. It will be further understood that the terms "includes", "comprises", "including" and/ or "comprising", specifies the presence of stated features, actions, integers, steps, operations, elements, and/ or components, but do not preclude the presence or addition of one or more other features, actions, integers, steps, operations, elements, components, and/ or groups thereof. The mere fact that certain measures are recited in mutually different dependent claims does not indicate that a combination of these measures cannot be used to advantage.

## Claims

1. A cooling device (210), attachable to an end-section (200) of a stator (120), which is forming an electrical machine (100) in conjunction with a rotor (110), wherein the stator (120) comprises a stator winding, and wherein the cooling device (210) comprises:
a fluid inlet section (211), connectable to a cooling channel (140) of the stator (120), wherein the fluid inlet section (211) is configured to receive cooling fluid via the cooling channel (140), when connected; and
a fluid outlet section (212), in communication with the fluid inlet section (211), wherein the fluid outlet section (212) is directed to output received cooling fluid in a direction towards an end winding section (220) of the stator winding.

2. The cooling device (210) according to claim 1, wherein the fluid outlet section (212) comprises a spray nozzle, configured to spray cooling fluid onto the end winding section (220) of the stator winding.

3. The cooling device (210) according to claim 1, wherein the fluid outlet section (212) comprises a jet nozzle, configured to spray cooling fluid onto the end winding section (220) of the stator winding.

4. The cooling device (210) according to any one of the preceding claims, comprising a manifold section (213), fluidly connected to multiple fluid outlet sections (212).

5. The cooling device (210) according to claim 3, wherein the multiple fluid outlet sections (212) are distributed radially.

6. The cooling device (210) according to any one of claims 4-5, wherein the manifold section (213) is fluidly connected to multiple fluid inlet sections (211).

7. The cooling device (210) according to any one of the preceding claims, wherein the fluid outlet section (212) is directed towards a predicted hot spot of the end winding section (220) of the stator winding.

8. The cooling device (210) according to claim 7, wherein the predicted hot spot of the end winding section (220) of the stator winding is situated at the end winding section (220) which is situated closest to the rotor (110), in radial direction.

9. The cooling device (210) according to any one of the preceding claims, wherein the end winding section (220) of the stator winding is enclosed by a stator housing (320) which, in conjunction with the cooling device (210), form a cavity for submerging the end winding section (220) with the cooling fluid.

10. The cooling device (210) according to any one of the preceding claims, comprising a sealing element (310) forming a seal against leakage of cooling liquid into an airgap (230) between the stator (120) and the rotor (110).

11. The cooling device (210) according to any one of the preceding claims, wherein the flow of cooling fluid through the cooling device (210) is reversable, such that cooling fluid is absorbed via the fluid outlet section (212) and forwarded via the fluid inlet section (211) to the cooling channel (140) of the stator (120).

12. The cooling device (210) according to any one of the preceding claims, wherein the cooling device (210) has an annular shape and a slotted profile, allowing passage of the stator winding when the cooling device (210) is attached to the end-section (200) of the stator (120).

13. An electrical machine (100), comprising:
a stator (120) comprising a stator winding and a cooling channel (140);
a rotor (110), configured to operate coaxially inside the stator (120); and
a cooling device (210) according to any one of claims 1-12.

14. A vehicle (400) comprising an electrical machine (100) according to claim 13.
